# EUROPEAN PATENT APPLICATION

(11) **EP 4 124 967 A1**
(43) Date of publication of application: **01.02.2023**
(21) Application number: 21188271.7
(22) Date of filing: 28.07.2021
(51) Int. Cl.: G06F 16/21

(54) **A METHOD FOR ADAPTIVE DATA STORAGE OPTIMIZATION**

(71) Applicant: ABB SCHWEIZ AG, 5400 Baden (CH)
(72) Inventor: BICIK, Josef, 155 00 Praha (CZ)
(74) Representative: Maiwald GmbH

(57) **Abstract**

The invention relates to the field of optimizing a database scheme of data of objects (112, 114, 116) of a plant (110). The method comprises the steps of:
running a database query to obtain data for a plurality of objects (112, 114, 116) of the plant (110);
obtaining performance indicators of the database query for each one of the plurality of objects (112, 114, 116);
mapping a subset of the plurality of objects (112, 114, 116) into a cluster, based on the type of data of the objects (112, 114, 116);
optimizing the database scheme of one object of the plurality of objects (112, 114, 116) of the cluster; and
applying the optimized database scheme to other objects of the plurality of objects (112, 114, 116) of the cluster.

## Description

### Field of the Invention

The invention relates to the field of database optimizing, particularly for optimizing a database scheme of data of objects of a plant. The invention further relates to a program element, to a computer-readable storage medium, to a database, and to a use.

### Background

There are many plants that store various data of their objects, e.g. of objects that control and/or vary the plant and/or processes run on the plant. The access to at least some of the objects may be crucial, for instance because at least machines and/or service personnel require said data within a predefined time range. Hence, the access to at least some of the objects needs to be optimized or is optimized, in many cases by optimizing a database scheme of data of said objects. However, optimizing the database scheme of these data may be time-consuming.

### Description

It is an objective of the invention to provide an improved optimizing of a database scheme for storing data of objects, particularly of objects of a plant. This objective is achieved by the subject-matter of the independent claims. Further embodiments are evident from the dependent claims and the following description.

One aspect relates to a method for optimizing a database scheme of data of objects of a plant. The method comprises the steps of:
running a database query to obtain data for a plurality of objects of the plant;
obtaining performance indicators of the database query for each one of the plurality of objects;
mapping a subset of the plurality of objects into a cluster, based on the type of data of the objects;
optimizing the database scheme of one object of the plurality of objects of the cluster;
applying the optimized database scheme to the other objects of the plurality of objects of the cluster.
The sequence of these steps may vary, e.g. dependent on history and/or requirement.

A database scheme may be a database parameter set, e.g. of all the database parameters or of those parameters that are allowed to be changed by the database provider. The plant may be a building or another entity that is configured to run a process, for instance a chemical, mechanical, electrical, and/or another kind of process. The objects of the plant may be objects that control and/or vary the plant and/or one or more processes that are run on the plant, e.g. pump(s), heater(s), valve(s), vessel(s), turbine(s), control unit(s), switch(es), I/O(s) and/or further objects. The data of the objects of the plant may comprise "long-term" and/or static data, such as a serial number or a power consumption range, and/or "current" or "historical" data, for example a time-series of a temperature, a power consumption, a flow, and/or further data.

A database query may be run to get data for a plurality of objects of the plant, e.g. most recent data and/or "historical" data, and/or a time-series of data, which is, e.g., needed for a control and/or information step, which may be connected to the process and/or to any sub-process of the plant. Additionally or as an alternative, the database query may be run as a predefined suite of database queries, e.g. based on a performance evaluation suite for a database.

The performance indicators of the database query may be "simple" performance indicators, which can be obtained more or less "directly", for example CPU usage, memory (RAM) usage, number of input/output operations, etc. The performance indicators may be "consolidated" and/or "combined" performance indicators - sometime called Key Performance Indicators (KPIs) -, which can be obtained by applying some computing steps. Examples may be "query duration per data length", or "percentage or queries taking more than 200 ms", "delete time dependent on the block length", and/or other values that are considered as significant for the plant's and/or the database's performance.

The mapping may be performed by any multi-dimensional mapping method. The mapping may be based on the type of data of the objects, for instance on the kind of data of the objects (e.g. binary, analogue, and/or complex data), the kind of compression used for the data, and/or on quantitative data, such as on an overall volume of data, a frequency of data usage (e.g. once per week, day, hour, minute), and/or further types of data. The mapping may lead to one or more subsets of the plurality of objects, where each one of the subsets is mapped into one cluster. The mapping may result in clustering "similar" objects into one cluster, wherein their similarity is defined by the type of data of the objects, as pointed out above. The clusters may be mutually exclusive. The number of objects may be dependent on the mapping method. The number of objects of an cluster should be two or more, to exploit the strength of the method. An example of the mapping method may be the so-called "k-means clustering", which turned out to be fast converging for the data of the objects that were used. Additionally or as an alternative, other multi-dimensional mapping method may be used. In some cases, the mapping may intentionally be performed in a "reduced way", i.e. only using a predefined subset (or "concentrating" on it). This may be particularly advantageous in cases where not all the types of data are available - and/or only play a minor role - for the objects of interest.

The optimizing of the database scheme may be done for only one object of the cluster (resp. of each cluster). The one object may be selected, e.g., based on its performance indicators, for instance by selecting an object with the worst performance indicators of this cluster, by another criterion, or just using a random selection.

The optimizing of the database scheme may be performed on the production database and/or on a secondary system with similar hardware and software configuration, e.g. on a hot spare, or in the cloud on a system with emulated configuration and/or conditions. The optimization may be computationally demanding, because multiple objectives have to be considered, and the problem is highly unstructured and nonlinear. Suitable algorithms, possibly including metaheuristics, evolutionary algorithms - e.g., genetic algorithms, simulated annealing, swarm optimization, etc. - optimizing multiple objectives may be applied. Once the system determines an optimal storage strategy, resulting in an accordingly improved database scheme, which is given either by meeting absolute be "simple" performance indicators and/or KPIs, or gaining best improvement in relative performance indicators, or a combination of both. The optimality can also be assumed by reaching a computing budget - e.g. number of iterations of the optimization algorithm, allocated time, etc. -, while achieving improvement in performance indicators that are considered being worth applying. Additionally or as an alternative, the optimization may be achieved by applying a set of IF-THEN rules, e.g., IF "query execution time" > 500ms" AND "index on timestamp does not exist" THEN "create index on timestamp".

Then, this optimized database scheme can be applied to other objects of the cluster, e.g. to all of the other objects of the cluster, or to a selected subset of them. This may be performed "locally", i.e. for a database of one plant (the database itself may be distributed. This may also be performed for databases of more than one plant, e.g. by bringing an optimized database table of one or more objects of a first plant (e.g.) into a cloud, and a database of another (second, third, etc.) plant may use this optimized database table for optimizing their own "similar" objects. Their similarity may be found out by a mapping step as pointed out above.

This method advantageously leads to an improved optimizing of the database scheme, because this is a fast and efficient way of optimizing a whole bunch data in only few steps, provided a database scheme has been determined for this cluster of data. The clustering may exploit a kind of similarity that is highly relevant for the database and its parameter set. Thus, the time-consuming task of optimizing the database scheme for a plurality of objects may be reduced to optimizing the database scheme for one object only, and applying the optimized scheme to the objects of the cluster. This may not only reduce the time for the optimizing of the objects; additionally or as an alternative, the time save may be used for an even more diligent optimizing of the database.

In various embodiments, the database comprises time-series data of objects of the plant. This may advantageously influence the optimizing, e.g. by selecting a compression scheme that is well-adapted to time-series data, which may include a compression of correlated time-series data.

In various embodiments, the plurality of objects of the plant comprises a subset, particularly a real subset, of the objects of the plant, wherein the subset of objects is selected ad-hoc, and/or based on at least one of an access frequency, a last access time, and/or a last object's database section optimization time, i.e. the last time the database scheme of a given object was optimized. This may advantageously lead to a further increase in the optimizing efficiency, because only data of those objects may be optimized, which lead to a good improvement of the overall performance of the database. For instance, access to data objects that are rarely or less frequently used contribute less to the database's performance than more often accessed ones.

In various embodiments, the database query is run according to a predefined suite of database queries and/or an information need. The predefined suite of database queries may be an "off-the-shelf" performance suite (e.g. a so-called "benchmark"), it may be a suite adapted for this kind of database and/or this kind of plant's objects. The predefined suite may be determined by the information need, e.g. of service personnel or of maintenance personnel. The predefined suite may be "just real-world queries", i.e. queries that are performed randomly day-by-day, dependent on the plant's or the process' requirements.

In some embodiments, the performance indicators comprise at least one of: overall latency ("clock-on-the-wall" time needed for a query), processor (CPU) usage, working memory (RAM) usage, number of input and/or output operations of a storage unit, particularly a permanent or mass storage unit, e.g. HDD (magnetic or optical disks) or SSD (solid state disks), and/or network utilization.

In some embodiments, the performance indicators comprise consolidated and/or combined performance indicators. These performance indicators are sometimes called Key Performance Indicators (KPIs). These may be defined as special performance indicators for getting a clear indication of a sub-optimality of the database's performance and/or its overall performance, which may include a network and/or other entities connected to the database or "in the database loop". An example for an "absolute" KPI may be, e.g., "Retrieval of time series data over the last 7 days taking more than 200ms". Or, "relative" KPIs may cover the deterioration of performance over the time and may include metrics like "read time of data for this object over this period of time increased by X%" and others. Using these kind of performance indicators may lead to a prioritized list of candidate objects and/or tables for optimization, based on a multi-criteria ranking method using engineers' preferences as weights for the importance of execution time, CPU usage, storage space, RAM usage, network utilization, etc.

In various embodiments, the type of data of the objects comprises at least one of:
- a storage rate (e.g. number of blocks per second);
- a storage performance (e.g. read performance, a write performance, a delete performance, an overall query duration, number of I/O operations);
- an overall volume of data (e.g. blocks or KBytes);
- a frequency of data usage (e.g. once per week, day, hour, minute), and/or
- a kind of data (e.g. binary, analogue, and/or complex data);
- an ingestion rate (e.g. number of writes over a specified time interval);
- a number of slow queries (e.g. lasting more than 100 ms, 200 ms, etc.);
- a dead band (e.g. value change less than 2% of range);
- a retention period (e.g., 3 months, 1 year, etc.);
- a compression method (e.g. none, LZW (Lempel-Ziv-Welch), LZMA, etc.);
- indices used to speed-up query execution (e.g. timestamp, value, quality, object id, or combined indices including multiple attributes);
- an absolute number of records I the object;
- storage type (e.g., HDD, SSD, in-memory);
- modifying indexing algorithm (e.g., B-/B+ tree, Hash, R-/R+Tree, Bitmap, Reverse, etc.); and/or
- network distribution (e.g., IDs of nodes over which the object's data is distributed).

Thus, the type of data of the objects may comprise quantitative or non-quantitative types of data. For clustering, the quantitative types of data may be grouped or used as floating-point data; the non-quantitative types of data may be mapped to integer numbers (e.g. like data type "enum" for programming languages like C or C++), and/or to bits in a data field (e.g. for indices, where several of them may be used).

In various embodiments, the mapping is performed by using at least one of following methods:
- k-means clustering;
- self-organizing maps;
- hierarchical clustering;
- shared-nearest-neighbour-based clustering, by fast search and find of density peaks;
- density-based spatial clustering, particularly of applications with noise; and/or
- ordering points, to identify the clustering structure.
The methods actually used may depend of the kind of data in the database. For instance, the k-means clustering turned out to be fast converging for a set of data of the objects that were used in some optimization phases.

In various embodiments, the optimizing of the database scheme comprises a changing of at least one of following database entities:
- a data partitioning scheme, e.g. based on time to increase/decrease size of partitions, or based on other attributes such as value, quality, source, etc.;
- indices used to speed-up lookup resp. slow-down writing e.g. adding, removing or updating existing ones / changing type of the indexing algorithm;
- a dead-band setting, e.g. within allowed range e.g. increase dead-band to reduce the amount of data written;
- a compression algorithm, e.g. to change the compression algorithm for attributes to either improve compression rate or speed-up query execution;
- a storage type, e.g. HDD vs. SSD;
- a storage node, e.g. in case of a distributed database the system might try to move the data of an object to a different node;
- a modify data encryption algorithm, e.g. to use more efficient algorithm and/or dynamically move to a new algorithm to increase security, e.g. from AES128 to AES 512;
- an applying of caching (e.g., in-memory); and/or
- a pre-calculation of a predefined list of values (e.g., aggregated values like daily average temperature, maximum weekly power consumption).

In some embodiments, the method further comprises the steps of:
Optimizing the database scheme of at least one additional object of the plurality of objects of the cluster; and
applying a weighted average of each one of the database scheme entities that are changed.
This advantageously may lead to a further optimization of the database scheme, because it may be more adapted to the cluster's performance-relevant properties.

An aspect relates to a program element for executing the method described above and/or below, when running the program element on a database and/or on a database controlling unit as described above and/or below.

An aspect relates to a computer-readable storage medium where a computer program or a computer program product as described above is stored on.

An aspect relates to a database and/or a database controlling unit, configured to run a method as described above and/or below.

An aspect relates to a use of a database and/or a database controlling unit for storing data of objects of a plant and/or for optimizing the database as described above and/or below.

For further clarification, the invention is described by means of embodiments shown in the figures. These embodiments are to be considered as examples only, but not as limiting.

### Brief Description of the Drawings

The drawings depict:
- **Fig. 1**: schematically an example plant with some example objects;
- **Fig. 2**: a flow diagram according to an embodiment.
- **Fig. 3**: schematically an example of query performance statistics according to an embodiment;
- **Fig. 4**: schematically an example of ranked objects or tables requiring optimization according to an embodiment;
- **Fig. 5**: schematically an example of a change in storage strategy according to an embodiment;
- **Fig. 6**: schematically an example of types of data associated with an table used for clustering according to an embodiment,
- **Fig. 7**: schematically an example of a section of a database.

### Detailed Description of Embodiments

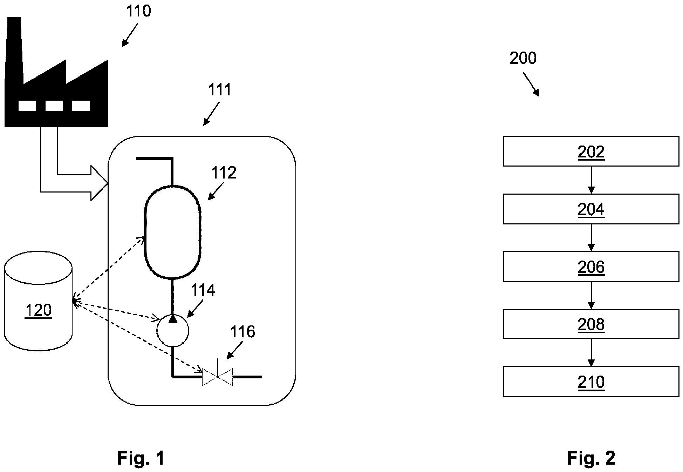

**Fig. 1** shows schematically an example plant 110 with some example objects, which are shown schematically in a small section of the plant 110. A cut-out of the plant 110 shows some example objects of the plant 110: a vessel 112, a pump 114, and a valve 116. The data of the objects 112, 114, 116 can be accessed by a database 120. The database 120 is run and/or can be optimized by a database scheme, which comprises parameters for running the database 20.

**Fig. 2** shows a flow diagram 200 according to an embodiment. In a step 202, a database 20 query is run to obtain data for a plurality of objects 112, 114, 116 of a plant (see **Fig. 1**)**.** In a step 204 performance indicators of the database query are obtained for each one of the plurality of objects 112, 114, 116. In a step 206, a subset of the plurality of objects 112, 114, 116 is mapped into a cluster, based on the type of data of the objects. In a step 208, the database scheme of one object of the plurality of objects of the cluster is optimized. In a step 210, the optimized database scheme is applied to the other objects of the cluster.

Note that the steps of method 200 need not necessarily be performed in the sequence depicted in **Fig. 2**. For instance, the clustering of step 206 may be done very early or only once for a configuration of the plant, for example before step 202. For a further sequence example, obtaining performance indicators in step 204 may be repeated, applying several types of performance indicators. For another example, steps 206 and 208 may be exchanged or run in parallel, i.e. one object may be optimized before the clustering, or in parallel to this. In some embodiments, the step 208 may be done for more than one object.

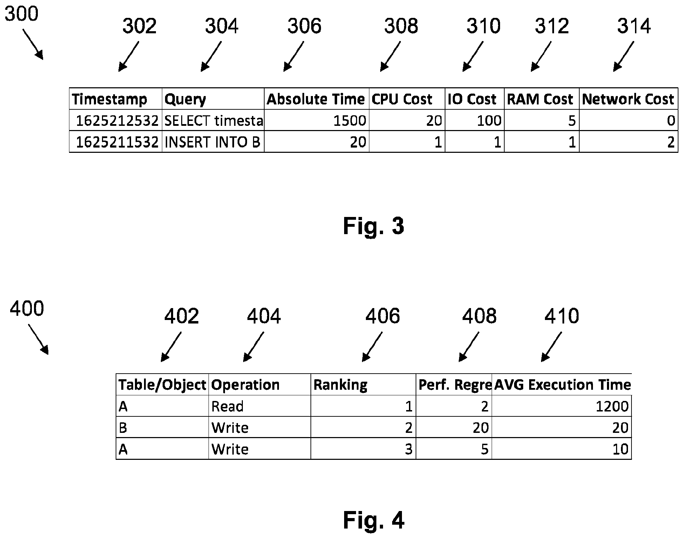

**Fig. 3** shows schematically a table 300 with an example of query performance statistics according to an embodiment. The table 300 may, for instance, hold a timestamp 302, a query 304, and the costs of the query. The cost may comprise an absolute or "clock on the wall" time 306 (e.g. in ms), a CPU cost 308 (e.g. in ms), an I/O cost (e.g. read/write operations), a RAM cost (e.g. in KBytes), a network cost (e.g. in KBytes), and/or further costs of query 304.

**Fig. 4** shows schematically a table 400 with an example of ranked objects or tables requiring optimization according to an embodiment. This may contribute to determine sub-optimally running operations, e.g. slow queries, queries consuming too many resources, and/or stressing system load. Said sub-optimality may be defined using absolute or relative Key Performance Indicators (KPIs), or their combination. An absolute KPI could be e.g. "Retrieval of time series data over the last 7 days should take less than 200ms". On the other hand, relative KPIs can cover the deterioration of performance over the time and might include metrics like: "the read time of data for this object over this period of time increased by X%" and others. The output of this evaluation may be a prioritized list of candidate objects or tables for optimization based on a multi-criteria ranking method. Additionally, Engineers' preferences may be used as weights for the importance of execution time, CPU usage, storage space, RAM usage, network utilization, etc. An example of such an output list is shown in table 400. The table 400 may comprise an object 402, operation performed 404 (e.g. read, write, delete), a ranking 406 ("1" may be highest, suggesting that the database storage scheme of this object should be optimized), a performance regression 408 (e.g., read / write queries on the table are x% slower than the average over the last X days), and an average execution time for a query involving a given object (e.g., 500 ms).

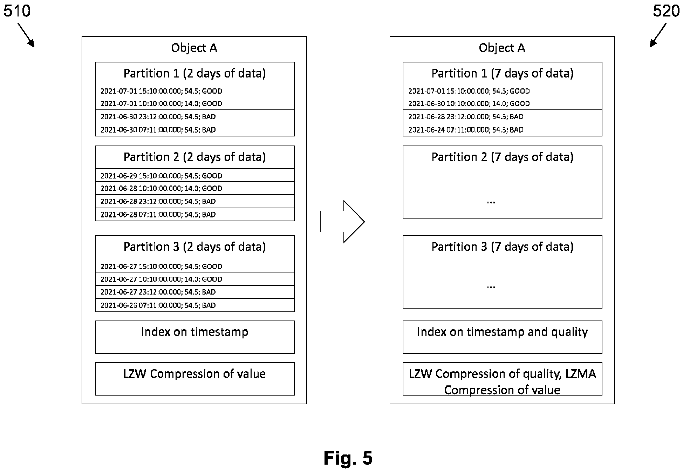

**Fig. 5** shows schematically tables 510, 520 with an example of a change in storage strategy according to an embodiment. Table 510 shows a situation before the change, table 520 after the change. Table 510 shows data of an object A (e.g. a temperature sensor). Object A is stored in partitions 1, 2, 3, each holding 2 days of data of object A. Each line of the partitions has an entry for a timestamp (when the data has been recorded), a data value (e.g. a floating point number), and a data quality (e.g. good, bad, uncertain). Furthermore, table 510 holds an index on the timestamps, for faster accessing the data in partitions 1, 2, 3. The last section holds the values of the data, in an LZW-compressed form. Table 520 represents an optimization showing that better read performance may be achieved if data is partitioned in weekly interval. This may result in faster read queries that typically span over 5 days. For this object, the users were also typically filtering for GOOD values only and the addition of an index on quality results in faster query execution and lower resource usage. Moreover, the optimization may have determined that quality can be compressed well using LZW compression algorithm and disc space may be saved by applying LZMA compression of value without degrading performance. Note that conducting such experiments may make sense particularly on a database with many objects or tables, where queries typically do not include JOIN operations.

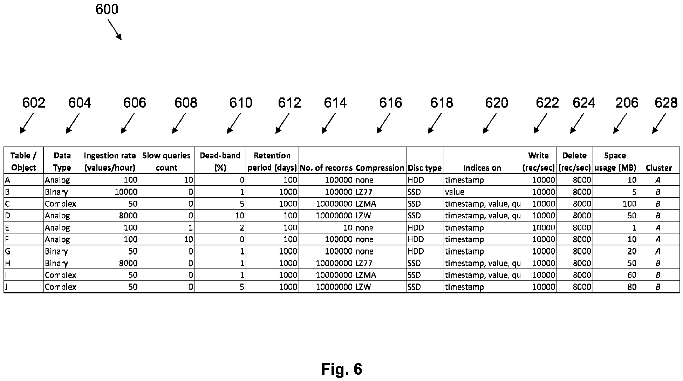

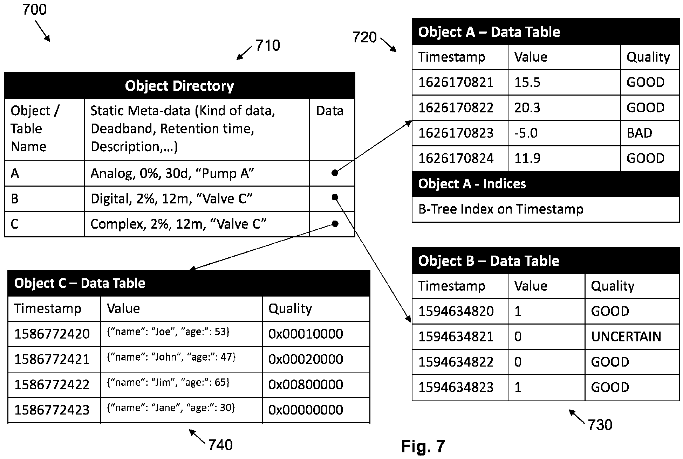

**Fig. 6** shows schematically a table 600 with an example of types of data associated with an table used for clustering according to an embodiment. The table 600 may comprise, for instance, following data:
- an object name 602, which may be used as a key; the object name 602 may also serve as a kind of pointer to an object data table, as shown in Fig. 7;
- a kind of data 604 (e.g. binary, analogue, and/or complex data);
- an ingestion rate 606 (e.g. number of writes over a specified time interval);
- a number of slow queries 608 (e.g. lasting more than 100 ms, 200 ms, etc.);
- a dead band 610;
- a retention period 612;
- an overall volume of data 614 (e.g. blocks or KBytes);
- a compression method 616 (e.g. none, LZW, LZMA, etc.);
- a storage type 618, e.g. HDD vs. SSD;
- indices used 620 (e.g. timestamp, value, quality, etc.);
- a write rate 622 (e.g. number of blocks per second);
- a delete rate 624 (e.g. number of blocks per second);
- an overall volume of data 626 (e.g. in KBytes);
- a cluster 628 (here: A or B) the object is mapped to.
In the example shown, objects are only mapped to two clusters. Objects A, E, F, G are mapped to cluster A; objects B, C, D, H, I, J are mapped to cluster B. As can be seen, the mapping to cluster A or B has been done based on the type of data of the objects.

**Fig. 7** shows schematically an example of a section 700 of a database 120 (see e.g. **Fig. 1** and/or **Fig. 6**)**,** comprising objects or tables A, B, and C. The section 700 comprises an object directory 710, which comprises metadata, like kind of data, deadband, retention time, description, etc. Furthermore, the object directory 710 has links or pointers to data tables 720, 730, 740 of objects A, B, and C, respectively. Example table 720 holds a time-series of data of object A, comprising timestamps, floating-point data values, and data quality indicators, and an index on the timestamps. The floating-point data values may be compressed, e.g. by using a representation that takes less than 64 or 32 bits. Example table 730 holds a time-series of data of object B, comprising timestamps, integer data values, and data quality indicators. Example table 740 holds a time-series of data of object C, comprising timestamps, an array of data values, and data quality indicators, possibly with another representation than used for table 730.

## Claims

1. A method for optimizing a database scheme of data of objects (112, 114, 116) of a plant (110), the method comprising:
running a database query to obtain data for a plurality of objects (112, 114, 116) of the plant (110);
obtaining performance indicators of the database query for each one of the plurality of objects (112, 114, 116);
mapping a subset of the plurality of objects (112, 114, 116) into a cluster, based on the type of data of the objects (112, 114, 116);
optimizing the database scheme of one object of the plurality of objects (112, 114, 116) of the cluster; and
applying the optimized database scheme to other objects of the plurality of objects (112, 114, 116) of the cluster.

2. The method of claim 1,
wherein the database comprises time-series data of objects (112, 114, 116) of the plant (110).

3. The method of any one of the preceding claims,
wherein the plurality of objects (112, 114, 116) of the plant (110) comprises a subset, particularly a real subset, of the objects (112, 114, 116) of the plant (110),
wherein the subset of objects (112, 114, 116) is selected ad-hoc and/or based on at least one of: an access frequency, a last access time, and/or a last object's database section optimization time.

4. The method of any one of the preceding claims,
wherein the database query is run according to a predefined suite of database queries and/or an information need.

5. The method of any one of the preceding claims,
wherein the performance indicators comprise at least one of: overall latency, processor usage, working memory usage, number of input and/or output operations of a storage unit, and/or network utilization,.

6. The method of any one of the preceding claims,
wherein the performance indicators comprise consolidated and/or combined performance indicators.

7. The method of any one of the preceding claims,
wherein the type of data of the objects (112, 114, 116) comprises at least one of: a storage rate, a storage performance, an overall volume of data, a kind of data, an ingestion rate, a number of slow queries, a dead band, a retention period, a compression, indices used, a storage type, and/or a network distribution.

8. The method of any one of the preceding claims,
wherein the mapping is performed by using at least one of: k-means clustering, and/or self-organizing maps, hierarchical clustering, shared-nearest-neighbour-based clustering, density-based spatial clustering, and/or ordering points.

9. The method of any one of the preceding claims,
wherein optimizing the database scheme comprises a changing of at least one of following database entities: a data partitioning scheme, an index used to speed-up lookup, a dead-band setting, a compression algorithm, a storage type, a storage node, a modify data encryption algorithm, to apply caching, and/or to pre-calculate a predefined list of values.

10. The method of any one of the preceding claims, further comprising the steps of:
optimizing the database scheme of at least one additional object of the plurality of objects (112, 114, 116) of the cluster; and
applying a weighted average of each one of the database scheme entities that are changed.

11. A program element for executing the method of any one of the preceding claims, when running the program element on a database and/or on a database controlling unit.

12. A computer-readable storage medium where a computer program according to the preceding claim is stored on.

13. A database (120) and/or a database controlling unit, configured to run a method according to any one of the claims 1 - 10.

14. Use of a database (120) and/or a database controlling unit for storing data of objects (112, 114, 116) of a plant (110) and/or for optimizing the database (120).
